# EUROPEAN PATENT SPECIFICATION

(11) **EP 1 427 193 B1**
(45) Date of publication and mention of the grant of the patent: **19.03.2014**
(21) Application number: 03025192.0
(22) Date of filing: 03.11.2003
(51) Int. Cl.: G06T 1/20, H04N 5/232, H04N 1/21, H04N 5/225

(54) **Multi-mode image capture apparatus**
Bildaufnahmegerät mit mehreren Betriebsarten
Dispositif de prise d'images à modes d'exploitation multiples

(30) Priority: 28.11.2002 KR 20020074893
(43) Date of publication of application: 09.06.2004
(73) Proprietor: Samsung Electronics Co., Ltd., Suwon-si, Gyeonggi-do, 443-742 (KR)
(72) Inventor: Lee, Yong-hyun, Youngtong-gu Suwon-city Gyunggi-do (KR)
(74) Representative: Walaski, Jan Filip

(56) References cited:
- US-A- 5 225 908
- US-A- 5 898 459
- US-B1- 6 356 709

## Description

The present invention relates to a multi-mode image capture apparatus comprising still image capturing means, moving image capturing means, mode determining means for determining whether the apparatus is in still image or moving image mode, first and second signal processors for processing still image and moving image signals from the capturing means and an interface for a removable solid-state memory.

Digital signal processors (DSP) are widely used to process digital signals in real time. DSPs are used in diverse products including audio systems such as small-sized disc players, wireless communication systems such as cellular phones, digital stillss cameras (DSCs), and digital video camcorders (DVCs).

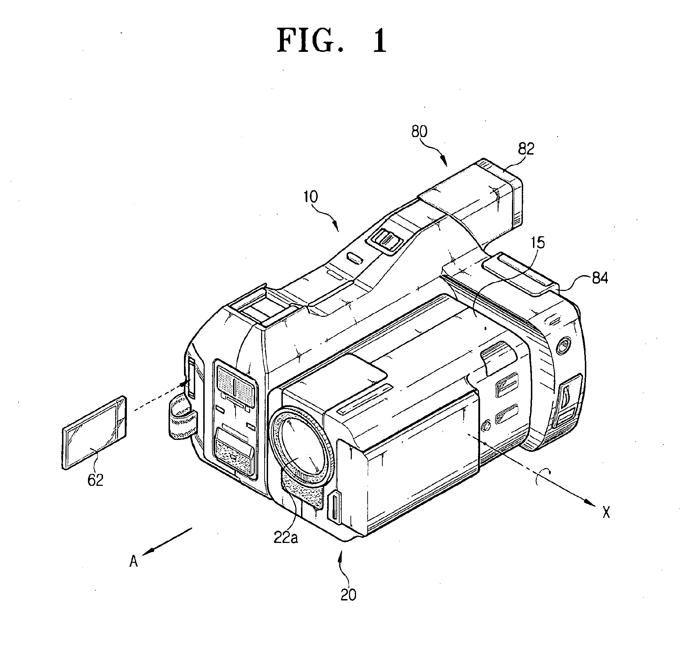

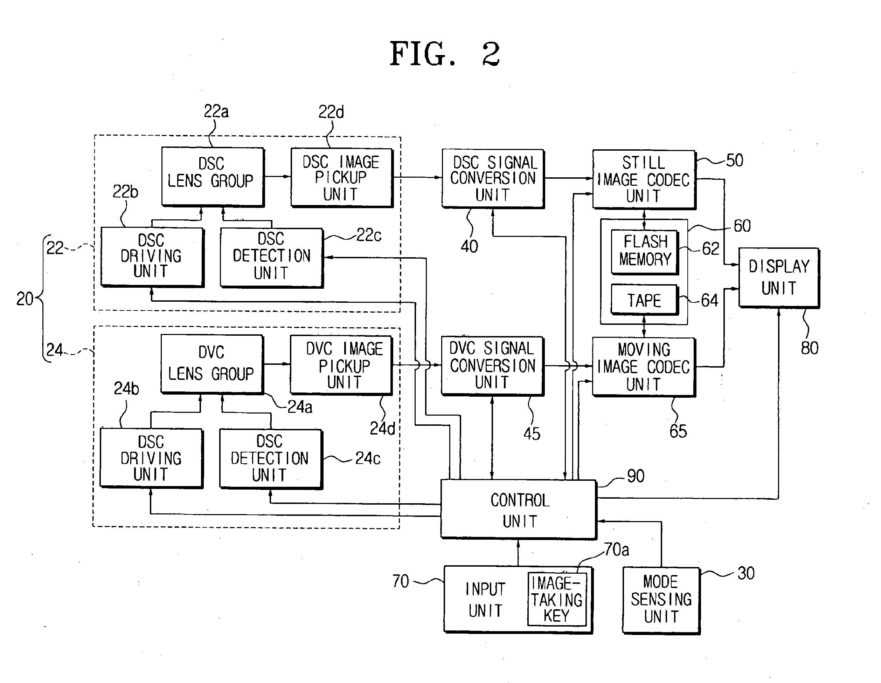

Figure 1 is a perspective view of a conventional combined DSC and DVC apparatus and Figure 2 is a block diagram of the apparatus of Figure 1.

Referring to Figures 1 and 2, a main body of the picture-taking apparatus has a DSC signal conversion unit 40, a DVC signal conversion unit 45, a still image codec unit 50, a moving picture codec unit 65, a storage unit 60, an input unit 70, a display unit 80 and a control unit 90 therein.

A camera part 20 is provided with a rotatably mounted housing 15, a first camera 22 for taking still images and a second camera 24 for taking moving pictures. Ordinarily, the first camera 22 and the second camera 24 (not visible in Figure 1) are disposed opposite to each other in the camera part 20.

Accordingly, the camera part 20 can be rotated through a certain angle clockwise or anticlockwise about an axis X. The DSC lens group 22a and the DVC lens group 24a rotate along with camera part 20 and remain parallel to the picture-taking direction A. That is, when the housing 15 is manually swivelled by 180° or substantially 180° as shown in Figure 1, the positions of the DSC lens group 22a and the DVC lens group 24a are interchanged.

Referring to Figure 2, the first camera 22 has the DSC lens group 22a, a DSC driving unit 22b, a DSC detection unit 22c and a DSC picture-taking unit 22d. The DSC lens group 22a is for taking still images and the DSC driving unit 22b moves a DSC zoom lens (not shown) and a DSC focus lens (not shown) under the control of the control unit 90.

The DSC detection unit 22c is a sensor for detecting lens positions under the control of the control unit 90. DSC picture-taking unit 22d converts an optical image signal produced by the DSC zoom lens (not shown) and the DSC focus lens (not shown) into an electronic image signal using a charge coupled device (not shown).

The second camera 24 has the DVC lens group 24a, a DVC driving unit 24b, a DVC detection unit 24c, and a DVC picture-taking unit 24d the operations of which are substantially the same as those of the first camera.

The DSC signal conversion unit 40 and the DVC signal conversion unit 45 remove noise from the electronic image signals from the DSC picture-taking unit 22d and the DVC picture-taking unit 24c, and amplify them such that the image signals are output uniformly. Furthermore, the DSC signal conversion unit 40 and the DVC signal conversion unit 45 respectively digitise the analogue image signals, process the digital image signals and output automatic control data.

The still image codec unit 50 compresses still image signals from the DSC signal conversion unit 40 under the control of the control unit 90 using a compression process such as JPEG. The compressed still image data is stored in a flash memory 62 in the storage unit 60.

The moving picture codec unit 65 compresses moving-picture signals output from the DVC signal conversion unit 45 using a compression process such as MPEG under the control of the control unit 90. The compressed moving-picture data is stored on a tape 64.

If a reproduction command signal for a stored image signal is input from the input unit 70, the still image codec unit 50 and the moving picture codec unit 55 decompress the compressed image signals stored in the flash memory 62 and the tape 64 as necessary.
For example, if a reproduction command signal for a still image is input from the input unit 70, the still image codec unit 50 decompresses the compressed still image signal stored in the flash memory 62 and outputs the decompressed data to the display unit 80.

The input unit 70 has a picture-taking button 70a and a plurality of control buttons (not shown) for applying a picture-taking command signal and other command signals to the control unit 90.

The display unit 80 has a view finder 82 or an LCD panel 84 provided on one side of the main body 10. The display unit 80 displays images captured through the DSC 22 or the DVC 24, or decompressed images according to the controls of the control unit 90.

The control unit 90 controls the overall operation of the picture-taking apparatus using automatic control data output from various control programs stored in the storage unit 60 and the DSC signal conversion unit 40 or the DVC signal conversion unit 45.

The control unit 90 determines the current picture-taking mode from the output signal of the mode detection unit 30 and drives the camera part 20 accordingly. For example, if a signal indicating that the DSC 22 is turned on and that the DVC 24 is turned off is input, the control unit 90 determines that the camera unit 20 is in still image mode.

As described above, the DSC and the DVC have memories for storing image information, respectively, and in the case of integrating the two appliances, the size of the digital camera is increased, and the operating system for controlling the respective systems becomes complicated.

A multi-mode image capture apparatus according to the present invention is characterised by switching means for selectively connecting the first and second signal processors to said interface in dependence on the current mode determined by the mode determining means.

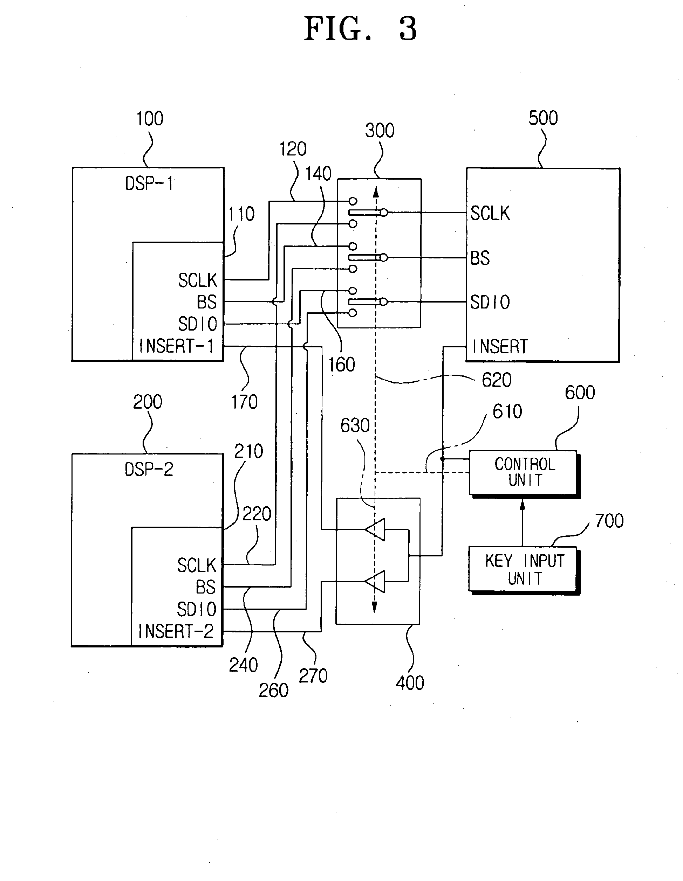

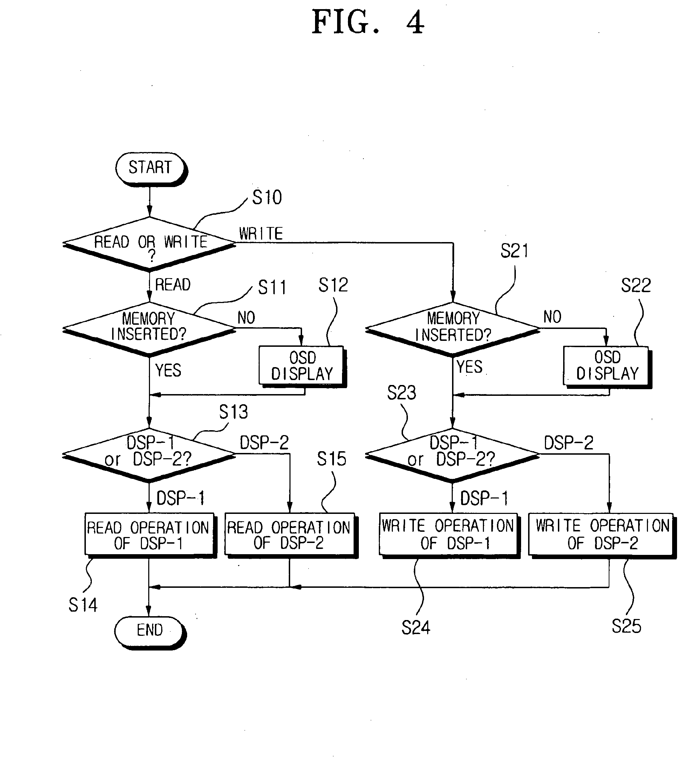

An embodiment of the present invention will now be described, by way of example, with reference to Figures 3 and 4 of the accompanying drawings in which:
Figure 1 is a perspective view of a conventional combined still and video picture-taking apparatus ;
Figure 2 is a block diagram of the conventional picture-taking apparatus of Figure 1;
Figure 3 is a block diagram illustrating a dual mode signal processing apparatus according to the present invention; and
Figure 4 is a flowchart illustrating a main signal process according to the present invention.

Where the present embodiment is similar to the apparatus shown in Figure 2, reference will be made to Figure 2 to avoid unnecessary repetition.

Referring to Figure 3, the memory control apparatus for a digital signal process includes a first digital signal processing unit 100 for a digital stills camera, a second digital signal processing unit 200 for a digital video camera, a memory stick 500, a selection switch 300, a three-state buffer 400, a key input unit 700 and a control unit 600.

The first digital signal processing unit 100 and the second digital signal processing unit 200 process digital signals of the digital stills camera and the digital video camera, respectively. The first digital signal processing unit 100 and the second digital signal processing unit 200 have interface units 110, 210 for writing data to and reading data from the memory stick 500. The interface units 110, 210 are respectively provided with clock terminals (SCLK) 120, 220, data terminals (SDIO) 160, 260, enable terminals (BS) 140, 240, and insert-1 and insert-2 terminals 170, 270 which are signal terminals which indicate that the memory stick 500 has been inserted.

The memory stick 500 can store digital signals and has a clock terminal (SCLK), a memory stick enable terminal (BS), a data terminal (SDIO) and an insert terminal for outputting a signal indicating that a memory stick 500 has been inserted.

Alternatives to the memory stick 500 include flash memories such as CF CARD, SMC CARD, MMC CARD, and so on, which are detachable from the apparatus. The selection switch 300 switches the signal paths between the first and second digital signal processing units 100, 200 and the memory stick 500.

The three-state buffer 400 receives insert signals when memory sticks 500 are inserted and outputs the insert signal to the insert-1 and insert-2 terminals 170, 270 so that the DSPs can communicate with the memory stick 500, under the control of the control unit 600. The control unit 600 receives can receive a key input from the key input unit 700 and output a control signal 620 for switching the selection switch 300 and a control signal 630 for controlling the three-state buffer 400. The control unit 600 also controls the entire system.

The key input unit 600 is provided with a key for selecting between DSC mode and DVC mode and system control keys for the recording and reproducing operations. Preferably, the mode selection may be performed by a rotary contact switch operable without a separate key input. That is, the rotary contact switch senses the image-taking mode corresponding to the digital stills camera or the digital video camera in accordance with the angular position of the camera part 20 with respect to the main body 10 as shown in Figure 1. It is more preferable that each mode be active for respective 180° ranges of the camera part's rotation.

An example of the operation of the memory control apparatus will now be described.

Referring to Figure 4, the control unit 600 determines whether the present mode is a read mode or a write mode from operation of the key input unit 700 (step S10) and, if it is determined that the present mode is the read mode, it determines whether the memory stick 500 has been inserted from the state of the insert signal line (step S11). At this time, if it is determined that the memory stick 500 has not been inserted, the control unit 600 controls an OSD (On-Screen Display) unit (not illustrated) to display a message informing the user that no memory stick 500 is present (step S12). Then, the control unit 600 determines whether to select the first digital signal processing unit mode or the second digital signal processing unit mode from operation of the key input unit 700 (step S13). If the first digital signal processing unit mode, i.e. the digital stills camera mode, is selected (step S14), the control unit 600 controls the selection switch 300, so that the the first digital signal processing unit can communicate with the memory stick 500. Specifically, it connects the clock terminal SCLK of the memory stick 500 to the clock terminal (SCLK) 120 of the first digital signal processing unit 100 and connects the enable terminal BS and the data terminal SDIO of the memory stick to the enable terminal (BS) 140 and the data terminal SDIO of the first digital signal processing unit 100, respectively. The control unit 600 simultaneously outputs a control signal 630 to the three-state buffer 400 for providing the insert signal to the first digital signal processing unit 100.

The control unit 600 also controls the system so that the first digital signal processing unit 100 reproduces the digital signal stored in the memory stick 500 and displays the reproduced signal on the display unit (not illustrated).

If the second digital signal processing unit mode, i.e. digital video camera mode, is selected at step S13 (step S15), the control unit 600 controls the selection switch 300 through the process described above, so that the terminals of the memory stick 500 are connected to the corresponding terminals of the second digital signal processing unit. The control unit 600 simultaneously outputs the control signal 630 to the three-state buffer 400 for providing the insert signal to the second digital signal processing unit. The control unit 600 also controls the system so that the second digital signal processing unit 200 reproduces the digital signal stored in the memory stick 500 and displays the reproduced signal on the display unit (not illustrated).

Alternatively, if the write mode is selected at step S10, the control unit 600 determines whether the memory stick 500 is inserted by interpreting the insert signal (step S21). At this time, if it is determined that no memory stick 500 has been inserted, the control unit 600 controls the OSD unit (not illustrated) to display a message informing the user that no memory stick 500 is present (step S22). Then, the control unit 600 determines whether to select the first digital signal processing unit mode or the second digital signal processing unit mode on the basis of operation of the key input unit 700 (step S23). If the first digital signal processing unit mode, i.e. digital stills camera mode, is selected (step S24), the control unit 600 controls the selection switch 300, so that the data writing terminals of the first digital signal processing unit are connected to the corresponding terminals of the memory stick 500.

The control unit 600 simultaneously outputs the control signal 630 to the three-state buffer 400 to provide the insert signal to the first digital signal processing unit. The control unit 600 also controls the system so that the signals output from the first digital signal processing unit 200 are stored in the memory stick 500.
If the second digital signal processing unit mode, i.e. digital video camera mode, is selected at step S23 (step S25), the control unit 600 controls the selection switch 300 through the same process as above, so that the data writing terminals of the second digital signal processing unit are connected to the corresponding terminals of the memory stick 500. The control unit 600 simultaneously outputs the control signal 630 to the three-state buffer 400 for providing the insert signal to the second digital signal processing unit 200. The control unit 600 also controls the system so that the output signals of the second digital signal processing unit 200 are stored in the memory stick 500.

According to the memory control apparatus and method for digital signal processing of the embodiment of the present invention described above, the memory and the buffer are commonly used when a plurality of DSPs are processed, and thus an operation system having a simple construction is provided.
While an embodiment of the present invention has been described in detail, it should be understood that various changes, substitutions and alterations can be made hereto without departing from the scope of the invention as defined by the appended claims.

## Claims

1. A multi-mode image capture apparatus comprising:
still image capturing means (22);
moving image capturing means (24);
mode determining means (700) for determining whether the apparatus is in still image or moving image mode;
first and second digital signal processors DSPs (100, 200) for processing still image and moving image signals from the capturing means (22, 24);
an interface for a removable solid-state memory (500); **characterised by** switching means (300) for selectively connecting the first and second DSPs (100, 200) to said interface in dependence on the current mode determined by the mode determining means;
a three state buffer (400), adapted to selectively output to the DSPs memory information indicating that the memory is available; and
a controller (600), adapted to control the switching means to route the signals to and from a selected DSP and to simultaneously control the buffer to selectively output the memory information indicating that the memory is available to the selected DSP.

2. A multi-mode image capture apparatus as claimed in claim 1, wherein:
the memory is a removable memory, and the memory information indicates that the memory has been inserted into a port for access by the memory control apparatus.

3. A multi-mode image capture apparatus as claimed in claim 1 or 2, wherein:
the memory is a flash memory.

4. A multi-mode image capture apparatus as claimed in any one of the preceding claims, wherein:
the switching means includes a plurality of selection switches, coupled between the DSPs and the memory, which are controlled by the controller.

5. A multi-mode image capture apparatus as claimed in any one of the preceding claims, wherein the mode determining means comprises a key input unit, adapted to indicate an operation mode; and
wherein the control unit controls recording of data in the memory or reproduction of data from the memory according to the operation mode indicated by the key input unit.

6. A multi-mode image capture apparatus as claimed in any one of the preceding claims, wherein:
the first one of the DSPs is employed with a digital stills camera comprising the still image capturing means and the second one of the DSPs is employed with a digital video camera comprising the moving image capturing means.

7. A method for operating a multi-mode image capture apparatus according to any one of the preceding claims, comprising:
controlling the switching means to selectively route signals for input to the DSPs from a memory and for output from the DSPs to the memory; and
controlling the buffer to selectively output to the DSPs memory information indicating that the memory is available.

8. A computer program which, when executed by a processor, is arranged to perform a method according to claim 7.

## Patentansprüche

1. Bildaufnahmevorrichtung mit mehreren Modi, die Folgendes umfasst:
ein Standbildaufnahmemittel (22);
ein Bewegtbildaufnahmemittel (24);
ein Modusbestimmungsmittel (700) zum Bestimmen, ob das Gerät sich in einem Standbildmodus oder einem Bewegtbildmodus befindet;
einen ersten und einen zweiten Digitalsignalprozessor DSP (100, 200) zum Verarbeiten von Standbild- und Bewegtbildsignalen von den Aufnahmemitteln (22, 24);
eine Schnittstelle für einen herausnehmbaren Halbleiterspeicher (500); **gekennzeichnet durch**
ein Schaltmittel (300) zum selektiven Verbinden des ersten und des zweiten DSP (100, 200) mit der Schnittstelle in Abhängigkeit von dem aktuellen Modus, der von dem Modusbestimmungsmittel bestimmt wurde;
einen Dreizustandspuffer (400), der dazu geeignet ist, Speicherinformationen, die anzeigen, dass der Speicher verfügbar ist, selektiv an die DSP auszugeben; und
einen Controller (600), der dazu geeignet ist, das Schaltmittel dahingehend zu steuern, die Signale an und von einem ausgewählten DSP zu leiten, und gleichzeitig den Puffer dahingehend zu steuern, die Speicherinformationen, die anzeigen, dass der Speicher verfügbar ist, selektiv an den ausgewählten DSP auszugeben.

2. Bildaufnahmevorrichtung mit mehreren Modi nach Anspruch 1, wobei:
der Speicher ein herausnehmbarer Speicher ist und die Speicherinformationen anzeigen, dass der Speicher in einen Port zum Zugriff durch die Speichersteuervorrichtung eingesetzt wurde.

3. Bildaufnahmevorrichtung mit mehreren Modi nach Anspruch 1 oder 2, wobei:
der Speicher ein Flash-Speicher ist.

4. Bildaufnahmevorrichtung mit mehreren Modi nach einem der vorhergehenden Ansprüche, wobei:
das Schaltmittel mehrere Auswahlschalter aufweist, die zwischen den DSP und dem Speicher gekoppelt sind und die von dem Controller gesteuert werden.

5. Bildaufnahmevorrichtung mit mehreren Modi nach einem der vorhergehenden Ansprüche, wobei das Modusbestimmungsmittel eine Schlüsseleingabeeinheit umfasst, die dazu geeignet ist, einen Betriebsmodus anzuzeigen; und
wobei die Steuereinheit das Aufzeichnen von Daten in dem Speicher oder die Wiedergabe von Daten aus dem Speicher gemäß dem Betriebsmodus, der von der Schlüsseleingabeeinheit angezeigt wird, steuert.

6. Bildaufnahmevorrichtung mit mehreren Modi nach einem der vorhergehenden Ansprüche, wobei:
der erste der DSP mit einer digitalen Fotokamera eingesetzt wird, die das Standbildaufnahmemittel umfasst, und der zweite der DSP mit einer digitalen Videokamera eingesetzt wird, die das Bewegtbildaufnahmemittel umfasst.

7. Verfahren zum Betreiben einer Bildaufnahmevorrichtung mit mehreren Modi nach einem der vorhergehenden Ansprüche, wobei das Verfahren Folgendes umfasst:
Steuern des Schaltmittels dahingehend, Signale selektiv zur Eingabe an die DSP von einem Speicher und zur Ausgabe von den DSP an den Speicher zu leiten; und
Steuern des Puffers dahingehend, Speicherinformationen, die anzeigen, dass der Speicher verfügbar ist, selektiv an die DSP auszugeben.

8. Computerprogramm, das bei Ausführung durch einen Prozessor dazu eingerichtet ist, ein Verfahren nach Anspruch 7 durchzuführen.

## Revendications

1. Appareil de prise d'images à modes multiples comprenant :
des moyens de prise d'images fixes (22) ;
des moyens de prise d'images animées (24) ;
des moyens de détermination de mode (700) pour déterminer si l'appareil est en mode d'images fixes ou d'images animées ;
des premier et deuxièmes processeurs de signaux numériques, DSP, (100, 200) pour traiter des signaux d'images fixes et d'images animées provenant des moyens de prise (22, 24) ;
une interface pour une mémoire amovible à semiconducteurs (500) ;
**caractérisé par**
des moyens de commutation (300) pour connecter de façon sélective les premier et deuxième DSP (100, 200) à ladite interface en fonction du mode actuel ayant été déterminé par les moyens de détermination de mode ;
une mémoire-tampon à trois états (400) conçue pour délivrer de façon sélective, aux DSP, des informations de mémoire indiquant que la mémoire est disponible ; et
un contrôleur (600), conçu pour piloter les moyens de commutation afin d'acheminer les signaux vers un DSP sélectionné, et à partir de celui-ci, et pour piloter simultanément la mémoire-tampon afin de délivrer de façon sélective, au DSP sélectionné, des informations de mémoire indiquant que la mémoire est disponible.

2. Appareil de prise d'images à modes multiples selon la revendication 1 :
la mémoire étant une mémoire amovible, et les informations de mémoire indiquant que la mémoire a été introduite dans un port en vue d'un accès par l'appareil de pilotage de mémoire.

3. Appareil de prise d'images à modes multiples selon la revendication 1 ou 2 :
la mémoire étant une mémoire flash.

4. Appareil de prise d'images à modes multiples selon l'une quelconque des revendications précédentes :
les moyens de commutation incluant une pluralité de commutateurs de sélection, couplés entre les DSP et la mémoire, qui sont pilotés par le contrôleur.

5. Appareil de prise d'images à modes multiples selon l'une quelconque des revendications précédentes, les moyens de détermination de mode comportant une unité de saisie à touches conçue pour indiquer un mode opérationnel ; et
cas dans lequel l'unité de commande pilote l'enregistrement de données dans la mémoire ou une reproduction de données à partir de la mémoire, en conformité avec le mode opérationnel indiqué par l'unité de saisie à touches.

6. Appareil de prise d'images à modes multiples selon l'une quelconque des revendications précédentes :
le premier des DSP étant employé en conjonction avec un appareil photo numérique comportant les moyens de prise d'images fixes, et le deuxième des DSP étant employé en conjonction avec une caméra vidéo numérique comportant les moyens de prise d'images animées.

7. Procédé destiné à l'exploitation d'un appareil de prise d'images à modes multiples selon l'une quelconque des revendications précédentes, comprenant les opérations consistant à :
piloter les moyens de commutation pour acheminer de façon sélective des signaux pour les injecter aux DSP à partir d'une mémoire et pour les délivrer à partir des DSP vers la mémoire ; et
piloter la mémoire-tampon afin de délivrer de façon sélective, aux DSP, des informations de mémoire indiquant que la mémoire est disponible.

8. Programme informatique qui, au moment de son exécution par un processeur, est agencé de façon à réaliser un procédé selon la revendication 7.
